# EUROPÄISCHE PATENTSCHRIFT

(11) **EP 1 391 624 B1**
(45) Veröffentlichungstag und Bekanntmachung des Hinweises auf die Patenterteilung: **07.12.2005**
(21) Anmeldenummer: 03018550.8
(22) Anmeldetag: 18.08.2003
(51) Int. Cl.: F16D 35/02

(54) **Flüssigkeitsreibungskupplung**
Fluid friction clutch
Embrayage à frottement visqueux

(30) Priorität: 23.08.2002 DE 10238739
(43) Veröffentlichungstag der Anmeldung: 25.02.2004
(73) Patentinhaber: Behr GmbH & Co. KG, 70469 Stuttgart (DE)
(72) Erfinder: Dräger, Jochen, 75223 Niefern-Öschelbronn (DE); Schultheiss, Gerold, Dipl.-Ing., 75173 Pforzheim (DE); Stoklossa, Rudolf, 75417 Mühlacker (DE)
(74) Vertreter: Reiners, Thomas

(56) Entgegenhaltungen:
- WO-A-01/14759
- DE-A- 19 741 073
- DE-A- 19 810 296
- US-A- 4 441 599

## Beschreibung

Die Erfindung betrifft eine Flüssigkeitsreibkupplung, insbesondere zur Verwendung in einem Kraftfahrzeug, gemäß dem Oberbegriff des Anspruchs 1. Eine solche kupplung ist aus US-A-4,441,599 bekannt.

Die zum Stand der Technik zählenden Flüssigkeitsreibkupplungen verfügen über einen Vorratsraum für eine hydraulische Flüssigkeit und einen Kupplungsbereich. Die Kraftübertragung erfolgt im Kupplungsbereich mit Hilfe einer hydraulischen Flüssigkeit, die bei Betätigung der Kupplung aufgrund von Fliehkräften vom Vorratsraum in den Kupplungsbereich transportiert wird. Zur Deaktivierung wird die Flüssigkeit vom Kupplungsbereich in den Vorratsraum zurückgepumpt. Dies erfolgt beispielsweise mittels einer Staupumpe, die zwischen Antriebs- und Abtriebskörper einen Staudruck erzeugt.

Es ist Aufgabe der Erfindung eine gegenüber dem Stand der Technik verbesserte Flüssigkeitsreibkupplung zur Verfügung zu stellen.

Zur Lösung der Aufgabe wird eine Flüssigkeitsreibkupplung mit den Merkmalen des Anspruchs 1 vorgeschlagen. Bevorzugte Weiterbildungen der Erfindung sind Gegenstand der Unteransprüche.

Die Erfindung zeichnet sich dadurch aus, dass im entkoppelten Zustand von Antriebs- und Abtriebskörper ein Vorratsraum im Antriebskörper die hydraulische Flüssigkeit weitgehend aufnimmt und bei Aktivierung der Kupplung die hydraulische Flüssigkeit vom Vorratsraum in den Kupplungsbereich gelangt. Durch die hydraulische Flüssigkeit wird der Spalt zwischen Antriebs- und Abtriebskörper im Kupplungsbereich wenigstens teilweise geschlossen und ein Drehmoment übertragen.

Die Verbindung zwischen Vorratsraum und Kupplungsbereich erfolgt getrennt für den Zu- und Rückfluss über jeweils wenigstens einen Strömungspfad. Wenigstens einer dieser Strömungspfade kann durch eine Steuereinrichtung geöffnet und verschlossen werden.

Weiterhin zeichnet sich die Erfindung dadurch aus, dass der Antriebskörper am äußeren Umfang wenigstens ein Strömungswiderstandselement aufweist. Je nach gewünschter Rückförderleistung können auch mehrere Strömungswiderstandselemente auf dem Umfang vorgesehen sein. Um bestimmte Eigenschaften, wie Rückfördermenge, Leckageverhalten, Druckabfall in Drehrichtung hinter dem Strömungswiderstandselement, zu beeinflussen, kann die Form des Widerstandselementes unterschiedlich sein. Eine bevorzugte Form ist beispielsweise die eines Quaders.

Eine Vorrichtung gemäß dem Anspruch 1 hat folgende Vorteile:

Die Erfindung hat in einer bevorzugten Ausführungsform eine Welle, die auf dem Antriebskörper drehfest gelagert ist und wenigstens zwei Bauteile aufweist.

Ein erstes Bauteil ist mit einer Antriebseinheit kraftschlüssig verbunden und bringt ein Drehmoment von Motorseite in die Kupplung ein. Die Antriebseinheit ist beispielsweise die Kurbelwelle des Motors.

Ein zweites Bauteil ist koaxial im ersten Bauteil aufgenommen und zu diesem drehbar gelagert.

Gemäß einer bevorzugten Ausführungsform ist das erste Bauteil eine Antriebswelle für den Antriebskörper und das zweite Bauteil eine Steuerwelle für die Steuereinrichtung zum Öffnen und Verschließen der Strömungspfade.

In einer weiteren bevorzugten Ausführungsform der Erfindung weist der Antriebskörper, der mit der Antriebswelle kraftschlüssig verbunden ist, im Kupplungsbereich konzentrische Vorsprünge auf, um die wirkende Oberfläche im Kupplungsbereich zu vergrößern. Aufgrund der unterschiedlichen Drehzahlen des Antriebs- und Abtriebskörpers entstehen in der hydraulischen Flüssigkeit Schubkräfte. Das übertragbare Drehmoment ist proportional zur Schubkraft und zur Oberfläche. Durch eine Oberflächenvergrößerung können somit größere Drehmomente übertragen werden.

Die Vorsprünge sind insbesondere auf den Außenflächen des Antriebskörpers angeordnet. Sie treten beispielsweise in axialer Richtung aus den Seitenflächen des Antriebskörpers hervor und sind in einer möglichen Ausführungsform im Querschnitt rechteckig gestaltet.

Gemäß einer besonders bevorzugten Ausführungsform können die Vorsprünge jedoch auch trapezförmig, dreiecksförmig oder mit einem kreisförmigem Abschluss ausgeführt werden.

Gemäß einer weiteren bevorzugten Ausführungsform weist der Abtriebskörper der Erfindung ebenfalls konzentrische Vorsprünge auf, um ebenfalls die wirkende Oberfläche zu vergrößern. Diese Vorsprünge liegen im Abtriebskörper innen und greifen mit einem vorgegebenen Abstand in die Vorsprünge des Antriebskörpers ein.

In einer besonders bevorzugten Ausführungsform der Erfindung besteht die hydraulische Flüssigkeit aus einem viskosen Fluid, das wenigstens ein Fluid aus einer Gruppe von Fluiden, die Hydrauliköl, Silikonöl, Silikon, synthetische oder natürliche Polymerverbindung und Kohlenwasserstoffverbindungen umfasst, aufweist.

Das Fluid schließt den Scherspalt im Kupplungsbereich zwischen Antriebs- und Abtriebskörper und überträgt aufgrund der Schubkräfte, die in dem Fluid wirken, das Drehmoment vom Antriebs- auf den Abtriebskörper. Durch die Viskosität des Fluids können beispielsweise die Schubkräfte oder der Zeitraum zum Befüllen des Kupplungsbereichs beeinflusst werden. Eine niedrige Viskosität ermöglicht eine schnelle Befüllung, hat aber geringe Schubkräfte und damit eine geringe Drehmomentübertragung zur Folge.

Die Erfindung überträgt vorzugsweise ein Drehmoment zwischen Antriebes- und Abtriebskörper von 10 Nm bis 1000 Nm, bevorzugt zwischen 25 Nm und 500 Nm und besonders bevorzugt zwischen 50 Nm und 250 Nm.

In einer besonders bevorzugten Ausführungsform der Erfindung erstreckt sich der Vorratsraum für die hydraulische Flüssigkeit innerhalb der äußeren Wandung des Antriebskörpers und im wesentlichen über einen durch den Kupplungsbereich vorgegebenen Radiusabschnitt. Der Vorratsraum ist beispielsweise so gestaltet, dass die hydraulische Flüssigkeit bei nicht betätigter Kupplung überwiegend in dem durch den Kupplungsbereich vorgegebenen Radiusabschnitt aufgenommen wird.

Vorzugsweise sind die Strömungspfade radial im Umfang des Antriebskörpers und mit einen vorgegebenen Abstand zum Strömungswiderstandselement angeordnet. Besonders bevorzugt ist der Abstand zum Strömungswiderstandselement so gering, dass die Strömungspfade unmittelbar an die Außenkontur des Strömungswiderstandselements angrenzen. Durch den Abstand kann unter anderem die Förderleistung und die Geschwindigkeit, mit der die hydraulische Flüssigkeit aus dem Vorratsraum in der Kupplungsbereich fließt, beeinflusst werden. Je geringer der Abstand ist, desto höher ist die Förderleistung bzw. die Fließgeschwindigkeit.

Gemäß einer bevorzugten Weiterbildung der Erfindung ist es vorgesehen, dass wenigstens ein Strömungspfad für den Rückfluss der hydraulischen Flüssigkeit aus dem Kupplungsbereich in den Vorratsraum in Drehrichtung vor und wenigstens ein Strömungspfad für den Zufluss der hydraulischen Flüssigkeit aus dem Vorratsraum in den Kupplungsbereich in Drehrichtung hinter dem Strömungswiderstandselement angeordnet ist. Die Strömungspfade sind insbesondere in der Außenwand des Umfangs des Antriebskörpers angeordnet und verbinden den Vorratsraum auf einem vorgegebenen Weg mit dem Kupplungsbereich. Sie sind beispielsweise als Bohrungen mit einem Durchmesser zwischen 1 mm und 10 mm, bevorzugt zwischen 2 mm und 8 mm und besonders bevorzugt zwischen 3 mm und 6 mm ausgeführt.

In einer weiteren vorteilhaften Ausgestaltung der Erfindung weist der Abtriebskörper auf der Innenseite des Umfangs eine konzentrische, in Umfangsrichtung umlaufende Ausnehmung auf. Die Ausnehmung ist insbesondere an die Form des Strömungswiderstandselements angepasst, um so den Staudruck und die Förderleistung der Staupumpe festzulegen.

Besonders bevorzugt greift die äußere Begrenzung des Strömungswiderstandselements in einem vorgegebenen Abstand in die in Umfangsrichtung umlaufende Ausnehmung des Abtriebskörpers ein:

In einer weiteren Ausführung der Erfindung greift das Strömungswiderstandselement in die in Umfangsrichtung umlaufende Ausnehmung weitgehend flüssigkeitsdicht ein. Hierdurch erreicht die Stauwirkung des Strömungswiderstandselements einen Maximalwert.

In einer weiteren vorteilhaften Ausgestaltung der Erfindung werden die Vorsprünge des Antriebskörpers und/oder des Abtriebskörpers durch mindestens eine im wesentlichen radial angeordnete Nut zumindest teilweise unterbrochen und dadurch strömungsdynamisch verbunden.

Gemäß einer bevorzugten Ausführungsform der Erfindung wird die Kontaktfläche im Kupplungsbereich in Abhängigkeit von der Menge der hydraulischen Flüssigkeit in Kupplungsbereich verändert. Der Kupplungsbereich füllt sich beispielsweise aufgrund der Fliehkräfte beginnend am äußeren Umfang. Die Kontaktfläche ist proportional zur Menge der hydraulischen Flüssigkeit im Kupplungsbereich.

Gemäß einer weiteren bevorzugten Ausführungsform der Erfindung ist die Nut in einem vorgegebenen Abstand beziehungsweise Winkel zum Strömungspfad angeordnet. Der Winkel ist durch zwei sich schneidende Geraden bestimmt, wobei die erste die Verlängerung der Mittelachse der Nut durch den Mittelpunkt des Antriebskörpers ist. Die zweite Gerade verläuft in Verlängerung der Mittelachse des Strömungspfades durch den Mittelpunkt des Antriebskörpers. Durch den Winkel bzw. Abstand wird, sowohl die Geschwindigkeit der Befüllung der Profile mit hydraulischer Flüssigkeit, als auch die Rückführung der hydraulischen Flüssigkeit gesteuert.

Eine weitere vorteilhafte Ausführung der Erfindung weist eine steuerbare Einrichtung zum Verschließen und Öffnen der Strömungspfade auf. In einer ersten Position öffnet die Einrichtung den Strömungspfad für den Zufluss der hydraulischen Flüssigkeit in den Kupplungsbereich und schließt den Rückfluss. In einer zweiten Position schließt die Einrichtung den Zufluss und öffnet den Rückfluss. Durch das Befüllen bzw. Ablassen wird die Menge der hydraulischen Flüssigkeit im Kupplungsbereich bestimmt und die Kupplung betätigt bzw. deaktiviert.

In einer bevorzugten Ausführung der Erfindung weist die Steuereinrichtung zum Verschließen und Öffnen der Strömungspfade ein Dichtungselement und ein Gegenwicht, die kraftschlüssig an der Steuerwelle angeordnet sind, und eine Rückstelleinrichtung auf. Die Rückstelleinrichtung ist beispielsweise an dem Antriebskörper befestigt und bringt die Steuerwelle, sobald kein Drehmoment mehr an ihr anliegt in eine Endlage, die der Endlage bei Anliegen des Drehmoments entgegengesetzt ist.

Das Dichtungselement weist beispielsweise einen vorgegebenen Abstand von 0,1 - 1,0 mm, bevorzugt 0,15 - 0,7 mm und besonders bevorzugt 0,2-0,4 mm von der Innenkontur des Antriebskörpers auf.

In einer besonders bevorzugten Ausführung der Erfindung weist die Steuereinrichtung zum Verschließen und Öffnen zwei Dichtungselemente, die über eine Gelenkverbindung mit der Steuerwelle verbunden sind und die Strömungspfade radial verschließen, auf. Die Dichtungselemente weisen ferner gemäß der vorliegenden Erfindung zwei Einrichtungen zum Ausgleich der Zentrifugalkräfte auf.

In einer bevorzugten Ausführungsform der Erfindung weist die steuerbare Einrichtung zum Verschließen und Öffnen zwei Dichtungselemente zum Verschließen der Strömungspfade auf, die über einen Hebel mit dem Antriebskörper verbunden sind. Der Hebel ist dabei besonders bevorzugt als Rückstellelement ausgebildet, beispielsweise in Form einer Blattfeder.

Die Dichtungselemente weisen beispielsweise einen vorgegebenen Abstand von 0,1 - 1,0 mm, bevorzugt 0,15 - 0,7 mm und besonders bevorzugt 0,2-0,4 mm von der Innenkontur des Antriebskörpers auf.

In einer bevorzugten Ausführungsform der Erfindung ist wenigstens einer der Strömungspfade, vorzugsweise alle Strömungspfade halbradial von einem Dichtungselement verschließbar. Die Richtung des Verschließens kann beispielsweise um 10° axial oder tangential gegenüber einer radialen Richtung geneigt sein.

Mit dem Begriff "halbradial" wird im Sinne der vorliegenden Erfindung eine Richtung bezeichnet, die gegenüber einer radialen, also von einer Drehachse wegweisenden Richtung geneigt ist. Die Neigungsachse kann dabei parallel zur Drehachse (halbradiales und halbtangentiales Verschließen) oder quer zur Drehachse (halbradiales und halbaxiales Verschließen) angeordnet sein. Der Neigungswinkel kann grundsätzlich jeden Wert zwischen 0° und 90° annehmen.

Die Vorteile des halbradialen Verschließens liegen darin, dass ein vorgegebener Abstand zwischen dem Dichtungselement und einer Öffnung des Strömungspfades nun nicht mehr eingehalten werden muß. Dies verbessert die Dichtwirkung des Dichtungselements.

In einer bevorzugten Ausführungsform der Erfindung wird die Steuerwelle in ihrer relativen Position zur äußeren Antriebswelle mittels einer elektromagnetisch gesteuerten Drehmomenteinrichtung verstellt. Die Steuerwelle wird beispielsweise zwischen zwei Endlage bewegt, wodurch die Einrichtung zum Verschließen und Öffnen der Strömungspfade betätigt wird. Die eine

Endlage öffnet den Zufluss in den Kupplungsbereich und die andere Endlage öffnet den Rückfluss aus dem Kupplungsbereich.

In einer besonders bevorzugten Ausführungsform der Erfindung weist die Drehmomenteinrichtung im wesentlichen einen kraftschlüssig mit der Steuerwelle verbundenen Magnetanker, einen kraftschlüssig mit der Antriebswelle verbundenen Flussleitring und eine im Gehäuse drehfest angeordnete Spule auf. Wird die Spule bestromt, entsteht zwischen dem Magnetanker und dem Flussleitring ein stromabhängiges Drehmoment und die Steuerwelle wird relativ zur Antriebswelle verdreht.

In einer bevorzugten Ausführungsform der Erfindung sind eine Lagerungseinrichtung für eine Lagerung des Abtriebskörpers auf der Welle und eine elektromagnetische Steuereinheit für eine Steuerung einer steuerbaren Einrichtung zum Verschließen und Öffnen eines oder mehrerer Strömungspfade auf gegenüberliegenden Seiten des Antriebskörpers angeordnet. Dadurch ist eine benachbarte Anordnung einer elektromagnetischen Steuereinrichtung zu einer steuerbaren Einrichtung zum Verschließen und Öffnen möglich, womit eine vereinfachte Magnetkraftübertragung und unter Umständen eine kompakte Bauweise verbunden ist.

Ein möglicher Einsatzbereich der Erfindung liegt im Kfz-Bereich. Die dort eingesetzten Verbrennungsmotoren haben in den letzten Jahren eine enorme Leistungssteigerung erfahren. Die Leistungssteigerung führt zu einer verstärkte Wärmeabgabe der Motoren. Neben dieser Wärmequelle erfolgt auch durch die gekühlte Abgasrückführung eine erhöhte Wärmeeinbringung in das Kühlwasser. Dieses wird durch ein Kühlsystem mit Hilfe eines Lüfter wieder abgekühlt. Der Lüfter ist über eine Flüssigkeitsreibkupplung mit dem Motor verbunden. Der Lüfter kann bedarfsabhängig zugeschaltet werden.

Die Steuerung der Kupplung erfolgt in Abhängigkeit von Regelgrößen. Diese sind beispielsweise die Kühlwasser- oder die Motortemperatur.

Gemäß der vorliegenden Erfindung wird unter dem Begriff "Steuern" der Vorgang in einem System verstanden, bei dem eine oder mehrere Größen als Eingangsgrößen andere Größen als Ausgangsgrößen aufgrund der dem System eigentümlichen Gesetzmäßigkeit beeinflussen.

Unter dem Begriff "Regeln" wird ein Vorgang verstanden, bei dem eine Größe, die zu regelnde Größe (Regelgröße) fortlaufend erfasst, mit einer anderen Größe, der Führungsgröße, verglichen und abhängig vom Ergebnis dieses Vergleichs im Sinne einer Angleichung an die Führungsgröße beeinflusst wird.

Im folgenden werden weitere Vorteile und Anwendungsmöglichkeiten der vorliegenden Erfindung anhand von verschiedenen Ausführungsbeispielen erläutert. Diese sind jedoch nur beispielhaft aufgezeigt und sollen nicht als Einschränkung der Erfindung verstanden werden.
Fig. 1 zeigt einen Schnitt durch ein erstes Ausführungsbeispiel einer Flüssigkeitsreibkupplung gemäß der vorliegenden Erfindung.
Fig. 2a zeigt einen Antriebskörper einer Flüssigkeitsreibkupplung gemäß Fig. 1.
Fig. 2b zeigt eine Schnittdarstellung eines Antriebskörper einer Flüssigkeitsreibkupplung gem. Fig. 2a entlang der Linie A - A.
Fig. 3a zeigt einen Querschnitt durch den Antriebskörper gem. Fig. 2a.
Fig. 3b zeigt einen Schnitt durch den Antriebskörper gem. Fig. 3a entlang der Linie B - B.
Fig. 4 zeigt einen Antriebskörper und eine Einrichtung zum Verschließen und Öffnen der Strömungspfade.
Fig. 5 zeigt eine Einrichtung zum Verschließen und Öffnen der Strömungspfade.
Fig. 6a zeigt einen Querschnitt durch den Antriebskörper gem. Fig. 6c.
Fig. 6b zeigt eine Detaildarstellung der alternativen Ausführungsform der Einrichtung zum Verschließen und Öffnen der Strömungspfade aus Fig. 6a.
Fig. 6c zeigt eine alternative Ausführungsform der Einrichtung zum Verschließen und Öffnen der Strömungspfade eines Antriebskörpers im Schnitt entlang der Linie C - C aus Fig. 6a.
Fig. 7a zeigt eine elektromagnetische Steuereinrichtung für die Einrichtung zum Verschließen und Öffnen der Strömungspfade.
Fig. 7b zeigt einen magnetischen Flussring einer elektromagnetischen Steuereinrichtung.
Fig. 7c zeigt einen Anker einer elektromagnetischen Steuereinrichtung.
Fig. 8 zeigt ein weiteres bevorzugtes Ausführungsbeispiel der Flüssigkeitsreibkupplung mit integrierter Riemenscheibenlagerung.
Fig. 9 zeigt ein weiteres bevorzugtes Ausführungsbeispiel der Flüssigkeitsreibkupplung mit einer alternativen Ausführungsform der Einrichtung zum Verschließen und Öffnen der Strömungspfade.
Fig. 10 zeigt einen Antriebskörper einer Flüssigkeitsreibkupplung gemäß Fig. 9.
Fig. 11 zeigt einen Antriebskörper und eine Einrichtung zum Verschließen und Öffnen der Strömungspfade.

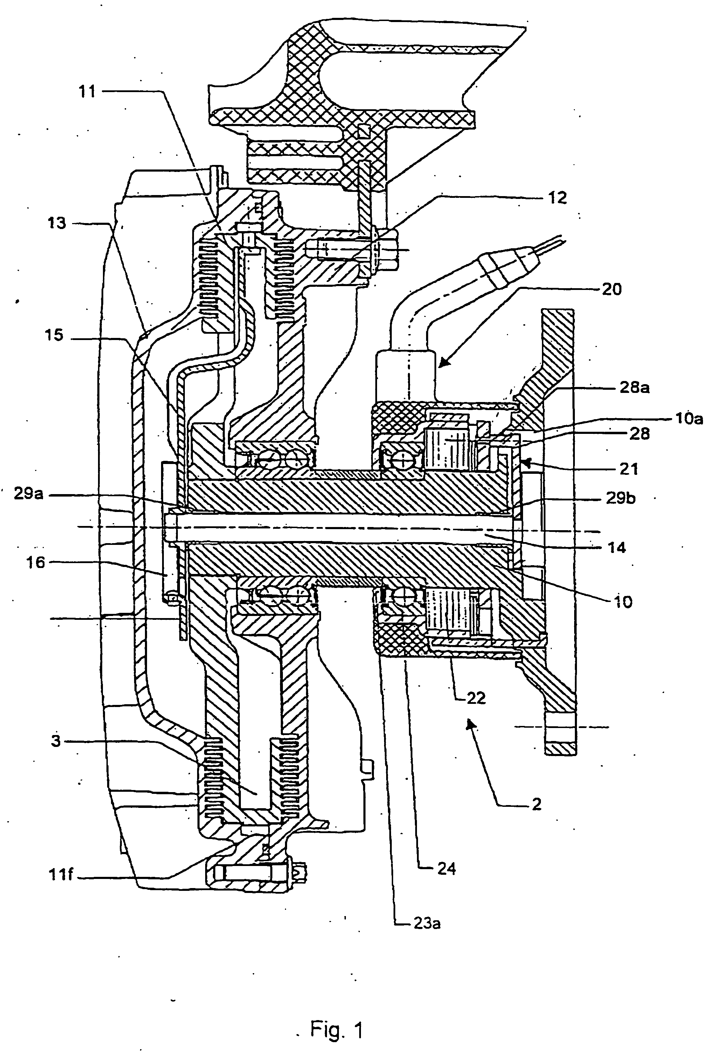

Fig. 1 zeigt eine Ausführungsform der Erfindung in einer Schnittdarstellung. Die Flüssigkeitsreibkupplung besteht zunächst aus einer Antriebswelle 10, einem Antriebskörper 11 und einem Abtriebskörper (bestehend aus einem Grundkörper 12 und einem Deckel 13). Der Deckel 13 weist ein in Umfangsrichtung umlaufende Ausnehmung 11f auf. Der Vorratsraum 3 für das viskose Fluid befindet sich innerhalb des Antriebskörpers. Die elektromagnetisch gesteuerte Drehmoment- und Steuereinrichtung 2 besteht aus einem drehfesten, über ein Wälzlager 24 auf der Antriebswelle 10 fixiertem, Spulenteil 20 und den mit der Antriebswelle 10 rotierenden Verstellelementen 21. Die Verstellbewegung wird über die Steuerwelle (Verstellwelle) 14 auf die Steuereinrichtung zum Öffnen und Verschließen der Strömungspfade (Drehschieber) 15 übertragen. Bei Bestromung der Magnetspule 22 bewegt sich die Steuerwelle 14 in eine erste Position (Endlage) und bei stromlose Magnetspule 22 bewegt eine Rückstelleinrichtung (Rückstellfeder) 16 die Steuerwelle 14 in die entgegengesetzte zweite Position (Endlage).

Die elektromagnetisch gesteuerte Drehmomenteinrichtung 2 arbeitet gemäß einer bevorzugten Ausführungsform nach dem Prinzip der Pulsweitenmodulation. Innerhalb einer festen Zykluszeit, typischerweise zwischen 0,5 s und 5 s, kann die relative Bestromungszeit, um damit die Verweilzeit in der beiden Positionen, zwischen 0 % und 100 % variiert werden.
Alternativ kann die elektromagnetisch gesteuerte Drehmomenteinrichtung auch proportional betrieben werden. Die Steuerwelle bewegt sich dann mit zunehmender Bestromung der Spule kontinuierlich vom einen Endanschlag zum anderen. Für diese Betriebsart ist eine besondere Auslegung des Magnetkraftverlaufs und der Rückstellfeder erforderlich, damit stabile Arbeitspunkte zwischen den Endanschlägen entstehen.

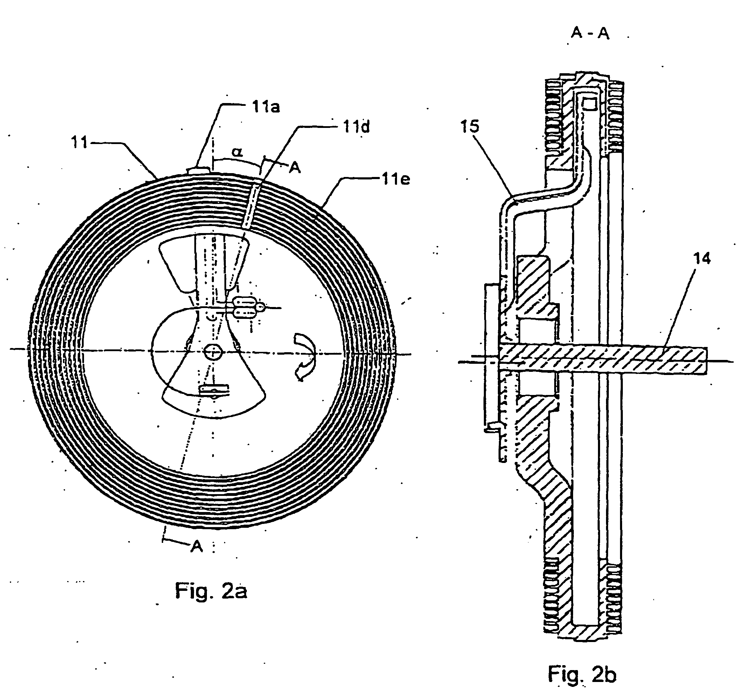

Fig. 2a/b zeigen den Antriebskörper 11 einer Flüssigkeitsreibkupplung. Am Umfang des Antriebskörpers 11 ist ein Strömungswiderstandselement 11a angeordnet. Dieses Strömungswiderstandselement ist der Staukörper der Staupumpe. In Drehrichtung vor dem Strömungswiderstandelement ist in einem Winkelabstand von beispielsweise 10° - 30° (Winkel α) zum Strömungspfad für den Rückfluss aus dem Kupplungsbereich in den Vorratsraum an der Außenfläche eine radial verlaufende Nut 11d angeordnet. Die Nut 11d unterbricht die Vorsprünge 11e des Antriebskörpers.

Weitere alternative Ausführungsformen weisen zwei oder mehr radial verlaufende Nuten auf, die auf beiden Seiten des Antriebskörpers 11 und/oder an der Innenseite des Abtriebskörpers (12,13) angeordnet sind.

Bei arbeitender Kupplung ist die Drehzahl des Antriebskörpers 11 größer als die des Abtriebskörpers(bestehend aus einem Grundkörper 12 und einem Deckel 13) (Fig. 1), dadurch staut sich vor dem Strömungswiderstandselement 11a hydraulische Flüssigkeit. Der dort herrschende Druck drückt die hydraulische Flüssigkeit bei geöffneter Rücklaufbohrung 11b in dem Vorratsraum 3. Bei geschlossener Rücklaufbohrung 11b weicht die hydraulische Flüssigkeit infolge des Druckes auf die radialen Nuten 11d aus und füllt den Kupplungsbereich mit den Vorsprüngen 11e von außen nach innen. Die Winkelposition der radialen Nuten 11d entscheidet einerseits über die Geschwindigkeit der Befüllung der Vorsprünge 11e mit hydraulischer Flüssigkeit und andererseits über die Vollständigkeit des Rückflusses in den Vorratsraum bei geöffneter Rücklaufbohrung 11b. Ein unvollständiger Rückfluss bedingt eine zu große Restmenge an hydraulischer Flüssigkeit im Kupplungsbereich und damit ein unerwünschtes Restdrehmoment der Kupplung.

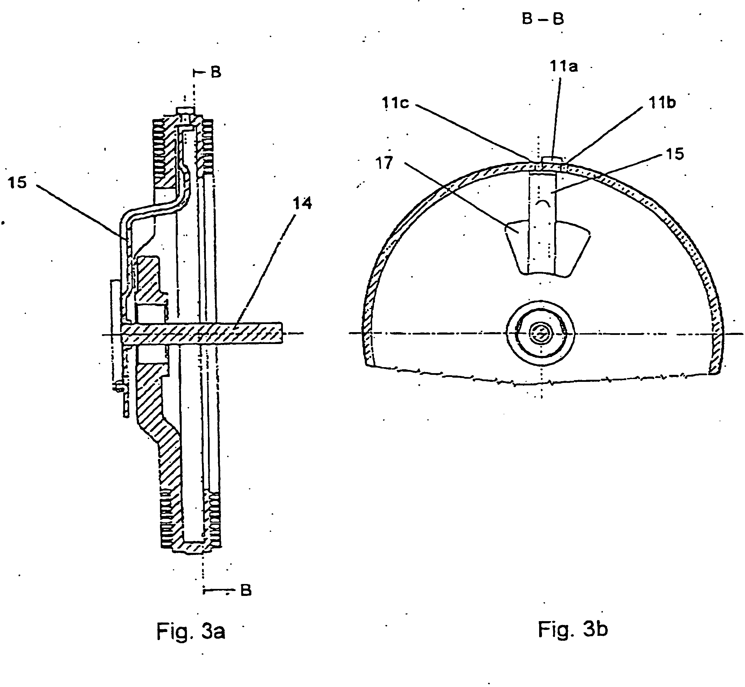

Fig. 3a/b zeigen einen Schnitt durch den Antriebskörper 11. In Drehrichtung vor dem Strömungswiderstandselement 11a ist ein Strömungspfad für den Rückfluss aus dem Kupplungsbereich in den Vorratsraum (Rücklaufbohrung) 11b und in Drehrichtung hinter dem Strömungswiderstandselement 11a ist ein Strömungspfad für den Zufluss (Zulaufbohrung) 11c der hydraulischen Flüssigkeit angeordnet.
Die Einrichtung zum Verschließen und Öffnen der Strömungspfade (Drehschieber) 15 verläuft durch eine Öffnung 17 im Antriebskörper 11 und verschließt je einen der beiden Strömungspfad 11b, 11c wechselseitig von innen. Das Schieberelement 15 ist mit der Steuerwelle 14 kraftschlüssig verbunden und berührt die Innenkontur des Antriebskörpers 11 nicht. Damit die Verstellbewegung hemmende Scherkräfte zwischen Schieberelement 15 und Antriebskörper 11 nicht zu groß werden, muss ein vorgegebener Spalt zwischen Schieberelement 15 und Antriebskörper 11 gewährleistet sein. Hierzu ist eine präzise Lagerung der Steuerwelle 14 erforderlich. Die Steuerwelle 14 wird beispielsweise gemäß einer bevorzugten Ausführungsform mit zwei Lagerbuchsen 29a, 29b (Fig. 1) in der Antriebswelle 10 gelagert.

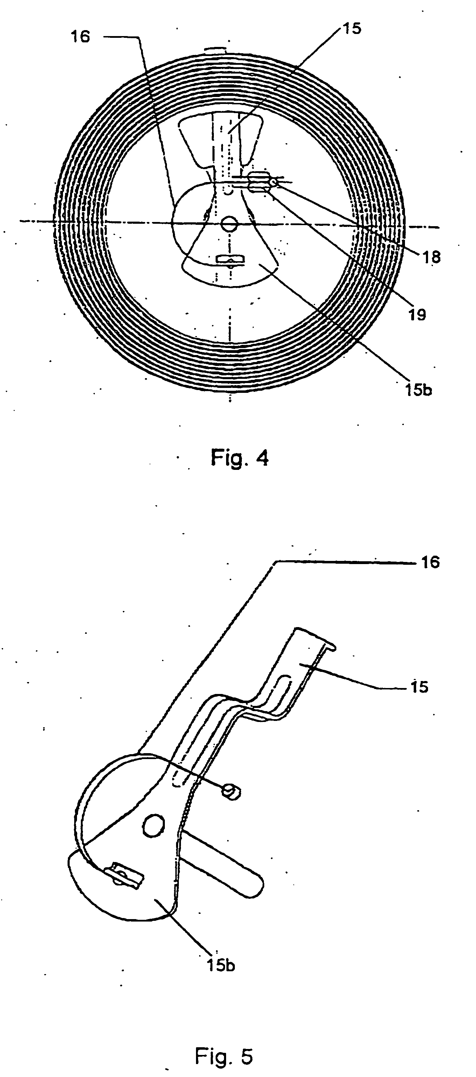

Fig. 4 zeigt eine Einrichtung zum Verschließen und Öffnen der Strömungspfade 15. Die Rückstelleinrichtung (Rückstellfeder) 16 weist an ihrem einen Ende eine Verdickung 18 auf und ist in einer Steckvorrichtung 19 an dem Antriebskörper gelagert. An Ihren anderen Ende ist sie an der Steuereinrichtung zum Öffnen und Verschließen der Strömungspfade (Drehschieber) 15 befestigt. Sie bringt die Steuerwelle 14, sobald kein oder ein sehr kleines Drehmoment an ihr anliegt, in eine Endlage, die der Endlage bei Anliegen des Drehmoments der elektromagnetischen Steuereinrichtung entgegengesetzt ist.

Fig. 5 zeigt den Drehschieber 15 und die Rückstelleinrichtung 16. Der Drehschieber 15 ist durch ein Gegengewicht 15b ausgewuchtet.

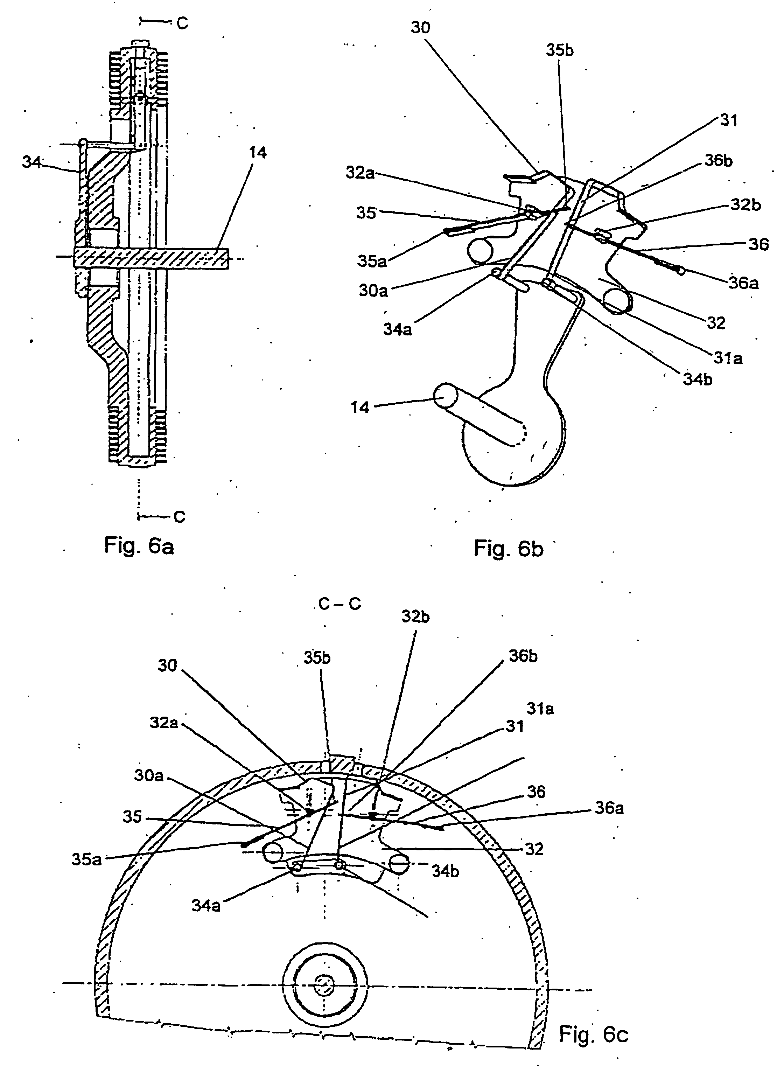

Fig. 6a/b/c zeigen eine alternative Ausführungsform der Einrichtung zum Verschließen und Öffnen der Strömungspfade (Membranventilanordnung), die den Durchfluss in vorzugsweise eine Richtung ermöglicht. Die Federbänder 30, 31 verschließen und öffnen die Strömungspfade 11b, 11c radial von innen. Beide Federbänder 30, 31 sind auf einer Trägerplatte 32 montiert. Sie werden an ihren freien Enden 30a, 31a von einem mit der Steuerwelle 14 verbundenen Mitnehmer 34 über Mitnahmestifte 34a, 34b bewegt. Vorteilhaft ist bei dieser Ausführung die geringe Leckrate an den Strömungspfaden 11b, 11c und die geringen Anforderungen an die Lagerpräzision der Steuerwelle 14. Zur Kompensation der Rückstellkräfte ist an jedem Federband 30, 31 ein Ausgleichshebel 35, 36 vorgesehen, der an seinem freien Ende ein Gegengewicht 35a, 36a aufweist. Die Gegengewichte 35a, 36a sind so bemessen, dass die abgehobene Masse des Federbandes gerade ausgeglichen wird. Die jeweils anderen Enden der Ausgleichshebel 35b, 36b sind, zum Zwecke der Mitnahme, in Öffnungen der Federbänder längsbeweglich eingesteckt. Gelagert sind die Ausgleichshebel auf entsprechenden Fixpunkten 32a/b auf der Trägerplatte 32.

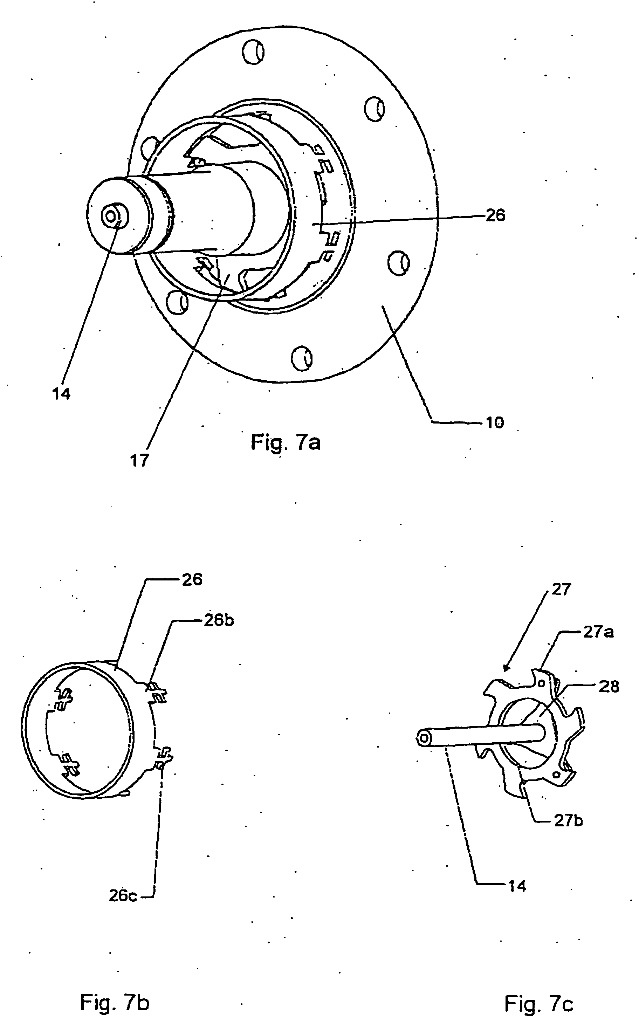

Fig. 7a/b/c zeigen Teile einer elektromagnetischen Steuereinrichtung, in der ein Magnetfeld induziert wird, um ein Drehmoment an der Steuerwelle zu erzeugen. Der Flussleitring 26 ist in seinem von der Spule abgewandten Bereich 26b polschuhartig ausgeführt. In einer weiteren Verlängerung 26c ist er in eine entsprechende Bohrung der Antriebswelle (Flanschwelle) 10 eingesteckt und form- und / oder stoffschlüssig fixiert. Diese Befestigungslaschen im Bereich 26b sind im Querschnitt stark verjüngt, damit möglichst wenig Magnetfluss über die Befestigung ungenutzt verloren geht. Der zu nutzende Magnetfluss wird über die Polschuhe im Bereich 26b an den relativ zur Antriebswelle 10 drehbaren Magnetanker 27 übertragen. Hierdurch entsteht ein stromabhängiges Drehmoment zwischen Magnetanker 27 und den Polschuhen des Flussleitrings 26. Der äußere Durchmesserbereich des Magnetankers 27a ist ebenfalls in Form von Polschuhen gestaltet. Im inneren Durchmesserbereich 27b wird der Magnetfluss über einen Spalt an die Flanschwelle 10 geleitet. Über einen weiteren Spalt 23a schließt der Magnetkreis wieder mit dem Gehäuse. Der Magnetanker 27 ist über einen Mitnehmer 28 kraftschlüssig mit der Steuerwelle 14 verbunden. Der Mitnehmer greift mit seinen Armen 28a durch entsprechende lokale Aussparungen 10a der Flanschwelle 10, wodurch eine Verstellbewegung in des Zentrum der Flanschwelle 10 übertragen werden kann, ohne deren mechanische Festigkeit wesentlich zu reduzieren. Die Steuerwelle ist durch zwei Lagerbuchsen 29 a/b in der Antriebswelle 10 gelagert.

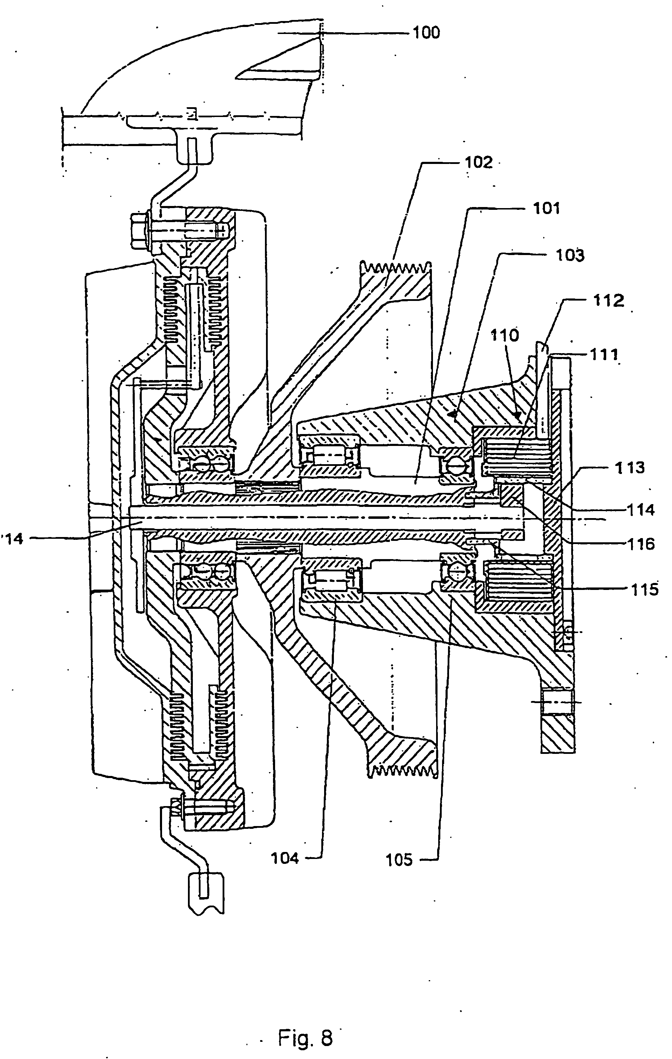

Fig. 8 zeigt eine alternative Ausführungsform der Flüssigkeitsreibkupplung mit integrierter Riemenscheibenlagerung. Die Flüssigkeitsreibkupplung ist hierbei mit dem Lüfter auf einem nicht rotierendem Bauelement des Motors befestigt.

Zur Kostenreduzierung und Vereinfachung der Montage wird beispielsweise eine separate Lagereinheit mit der Riemenscheibe zu einer Einheit mit der Flüssigkeitsreibkupplung zusammengefasst (Fig. 8).

Gemäß diesem Ausführungsbeispiel wird der Lüfter 100 auf dem Deckel und nicht auf dem Grundkörper befestigt. Dies hat den Vorteil, dass zunächst die Kupplungs-Riemenscheibeneinheit beispielsweise am Motor befestigt werden kann und anschließend der Lüfter auf die Kupplung montiert wird.

Das Ausführungsbeispiel besteht aus einer Antriebswelle 101, einer Riemenscheibe 102 und einem Lagergehäuse 103. Im Lagergehäuse 103 befinden sich zwei Wälzlager 104 / 105 und die elektromagnetisch gesteuerte Drehmomenteinrichtung 110, bestehend aus einer Spülenbaugruppe 111, die über eine elektrische Leitung 112 mit Strom versorgt wird. Das Lagergehäuse 103 wird durch einen Verschlussdeckel 113 abschlossen.
Der von der Spule erzeugte Magnetfluss wird über den Verschlussdeckel 113 über einen Spalt auf den mit der Antriebswelle 101 rotierenden Polring 114 übertragen. Der Polring 114 ist über eine magnetisch isolierende Hülle 115 mit der Antriebswelle 101 kraftschlüssig verbunden. Innerhalb der Antriebswelle 101 ist, wie in dem ersten ,Ausführungsbeispiel, die Steuerwelle 14 drehbar gelagert. Am magnetbaugruppenseitigen Ende der Steuerwelle 14 befindet sich ein Magnetanker 116, dessen Außendurchmesserbereich polschuhartig ausgebildet ist, wodurch bei Bestromung der Spule 111 eine gerichtete Kraft zwischen dem Magnetanker 116 und dem Polring 114 entsteht. Dieses Drehmoment bewegt die Steuerwelle 14 in eine Endlage. Eine hier nicht dargestellte Rückstellfeder bewegt die Steuerwelle 14 wieder in die Ausgangslage.

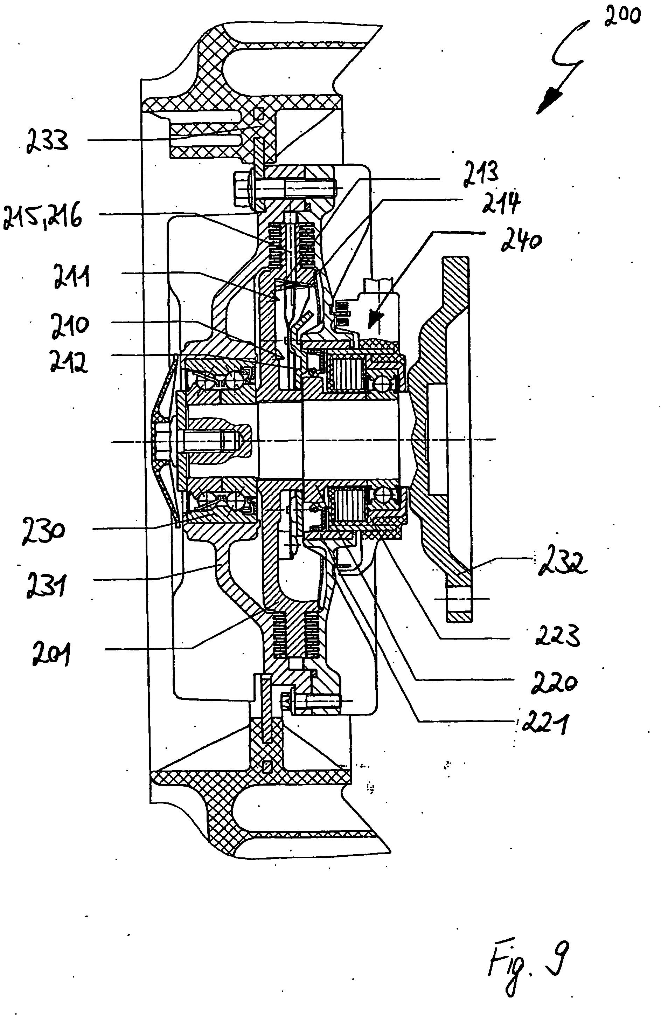

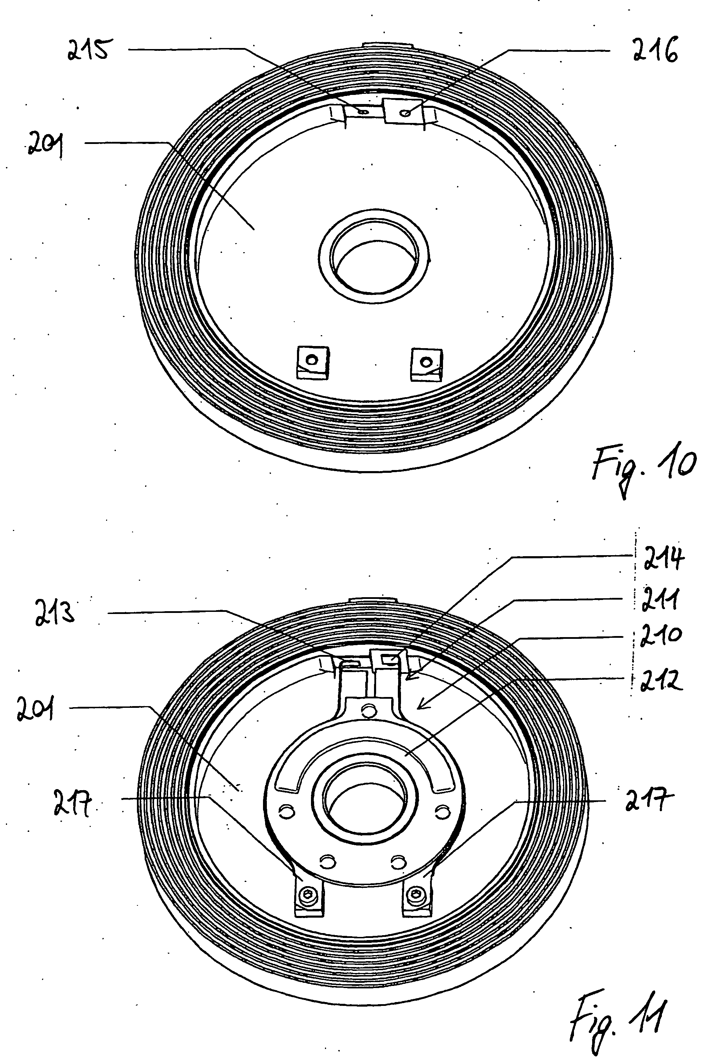

Die Fig. 9, 10 und 11 zeigen eine Flüssigkeitsreibkupplung 200, deren Ventilanordnung zum wechselseitigen Verschließen und Öffnen der Strömungspfade 215, 216 in der Primärscheibe 201 durch eine Magnetanordnung nach dem Klappankerprinzip betätigt wird. Das Ventilschließelement 211 ist Bestandteil des Ventilhebels 210 und direkt mit dem Klappanker 212 verbunden und wirkt mit seinen beiden Dichtflächen 213, 214 wechselseitig auf die Strömungspfade 215, 216. Der Ventilhebel ist über eine Blattfeder 217 elastisch mit der Primärscheibe 201 verbunden. Die Blattfeder und das Ventilschließelement können einteilig aus Federblech gefertigt sein.

Die Ebene der Dichtflächen kann, im Sinne eines Schieberventils, rechtwinklig zur Bewegungsrichtung des Schließelementes ausgeführt sein, der Druck des abzudichtenden Mediums wirkt dann nicht auf die Bewegung des Schließelementes ein, d. h. es gibt keine hydraulischen Störkräfte auf das Magnet-Feder-System. Die Bewegungsrichtung ist hier axial zur Kupplung. Jedoch muß eine solche Anordnung mit Dichtspalten im Bereich von 0,2 bis 0,4 mm betrieben werden, um ein Festklemmen zu vermeiden. Dieser Dichtspalt führt aber zu Leckageverlusten, welche die Funktion der Kupplung in verschiedenen Betriebspunkten beeinflussen. Ferner können im System vorhandene Partikel in dem Dichtspalt immer noch ein Verklemmen des Schließelementes verursachen.

In der weiter verbesserten Ausführungsform gemäß Fig. 9 sind die Dichtflächen in einem Winkel von ca. 80° zur Bewegungsrichtung des Schließelementes geneigt, damit verschwindet der Dichtspalt am Ende der Ventilbewegung, es wird ein hoher Dichtheitsgrad erzielt. Andererseits vergrößert sich der Dichtspalt mit dem Öffnungsweg erheblich, so daß Partikel nicht mehr zum Verklemmen führen können. Der Winkel ist so gewählt, daß einerseits der abzudichtende Druck möglichst wenig auf die Ventilbewegung einwirkt, andererseits aber auch keine Selbsthemmung eintritt.

Beispielsweise die in Fig. 3b beschriebene Ausführung verwendet ebenfalls Dichtflächen, welche um 90° gegenüber der Bewegungsrichtung des Ventilelementes geneigt sind. Die Bewegungsrichtung ist hier die Umfangsrichtung der Kupplung. Die Variante mit um ca. 80° geneigten Dichtflächen ist mit den angeführten Vorteilen hier ebenfalls anwendbar.

Damit das von der nicht rotierenden Elektrospule der elektromagnetischen Steuereinheit 240 erzeugte Magnetfeld wirkungsvoll auf den Magnetanker einwirkt, befindet sich der Magnetanker auf der der Spule zugewandten Seite der Primärscheibe. Den inneren Pol des Magneten bildet die mit der Flanschwelle rotierende stählerne Hülse 220. Der äußere Pol des Magneten ist die in den Gehäusedeckel eingefügte Stahlhülse 221, diese wird durch die stählernen Gehäuseelemente 223 der Magnetspule, mit denen sie über eine radialen Luftspalt in Verbindung steht, mit dem magnetischem Fluß beaufschlagt.

Diese kompakte geometrische Anordnung von Magnetanker zu Magnetspule wird ermöglicht durch eine Anordnung des zentralen Lagerelementes 230 des Kupplungsgehäuses auf der von dem Befestigungsflansch der Kupplung abgewandten Seite, also am frontseitigen Gehäuseteil 231. Der Lüfter kann dann von der Kupplungsfrontseite auf dem frontseitigen Gehäuseteil befestigt werden. Bei der Fahrzeugendmontage können dann Kupplung und Lüfter nacheinander und unabhängig voneinander am Motor montiert werden. Andererseits wird der direkte Kraftfluß von der Flanschwelle 232 über das Lagerelement 230 und das Gehäuseteil 231 zu dem Lüfter 233 gewährleistet.

## Patentansprüche

1. Flüssigkeitsreibkupplung, insbesondere für einen Kraftfahrzeuglüfter, mit einer drehbar gelagerten Welle, einem auf der Welle drehfest gelagerten Antriebskörper (11), einem auf der Welle drehbar gelagerten, den Antriebskörper (11) zumindest teilweise umschliessenden Abtriebskörper (12,13), und einem zwischen dem Antriebs-(11) und Abtriebskörper (12,13) angeordneten, ein viskoses Fluid aufnehmenden Kupplungsbereich, durch welchen Antriebs- (11) und Abtriebskörper (12,13) zur Übertragung eines Drehmoments koppelbar sind,
**dadurch gekennzeichnet, dass**
radial innerhalb eines äußeren Umfangs des Antriebskörpers (11) ein Vorratsraum (3) zur zumindest weitgehenden Aufnahme des Fluids vorgesehen ist, und
dass wenigstens ein erster Strömungspfad (11b) für den Rückfluss des Fluids aus dem Kupplungsbereich in den Vorratsraum (3) und wenigstens ein zweiter Strömungspfad (11c) für den Zufluss des Fluids aus dem Vorratsraum (3) in den Kupplungsbereich vorgesehen sind, und
dass der Antriebskörper (11) am äußeren Umfang mindestens ein Strömungswiderstandselement (11a) aufweist, das zwischen dem wenigstens ersten (11b) und dem wenigstens zweiten Strömungspfad (11 c) angeordnet ist und
dass weiterhin eine steuerbare Einrichtung zum Verschließen und Öffnen wenigstens eines dieser Strömungspfade (11b,c) vorgesehen ist.

2. Flüssigkeitsreibkupplung gemäß Anspruch 1, **dadurch gekennzeichnet, dass**
die Welle wenigstens zwei Bauteile aufweist, wobei ein erstes Bauteil (10) kraftschlüssig mit einer Antriebseinheit verbunden ist und ein zweites Bauteil (14) koaxial im ersten Bauteil (10) aufgenommen und gegenüber diesem drehbar gelagert ist.

3. Flüssigkeitsreibkupplung gemäß Anspruch 2, **dadurch gekennzeichnet, dass**
das erste Bauteil eine Antriebswelle (10) für den Antriebskörper (11) und das zweite Bauteil eine Steuerwelle (14), für die Einrichtung zum Verschließen und Öffnen der Strömungspfade (11b, c), ist.

4. Flüssigkeitsreibkupplung gemäß wenigstens einem der vorhergehenden Ansprüche, **dadurch gekennzeichnet, dass**
der Antriebskörper (11) mit der Antriebswelle (10) kraftschlüssig verbunden ist und der Antriebskörper (11) im Kupplungsbereich konzentrische Vorsprünge (11e) aufweist, die insbesondere auf den Außenflächen des Antriebskörpers (11) angeordnet sind.

5. Flüssigkeitsreibkupplung gemäß wenigstens einem der vorhergehenden Ansprüche, **dadurch gekennzeichnet, dass**
der Abtriebskörper (12,13) im Kupplungsbereich innen liegende, konzentrische Vorsprünge aufweist, die mit einem vorgegebenen Abstand in die Vorsprünge (11 e) des Antriebskörpers (11) eingreifen.

6. Flüssigkeitsreibkupplung gemäß wenigstens einem der vorhergehenden Ansprüche, **dadurch gekennzeichnet, dass**
das viskose Fluid wenigstens ein Fluid aus einer Gruppe von Fluiden aufweist, welche Hydrauliköl, Silikonöl, Silikon, synthetische oder natürliche Polymerverbindungen und Kohlenwasserstoffverbindungen umfasst.

7. Flüssigkeitsreibkupplung gemäß wenigstens einem der vorhergehenden Ansprüche, **dadurch gekennzeichnet, dass**
der Vorratsraum (3) für das Fluid sich im wesentlichen in einem zylindrischen Abschnitt im Kupplungsbereich innerhalb der äußeren Wandung des Antriebskörpers (11) erstreckt.

8. Flüssigkeitsreibkupplung gemäß wenigstens einem der vorhergehenden Ansprüche, **dadurch gekennzeichnet, dass**
die Strömungspfade (11b,c) radial außen im Umfangsbereich des Antriebskörpers (11) angeordnet sind und einen vorgegebenen Abstand zum Strömungswiderstandselement (11a) aufweisen.

9. Flüssigkeitsreibkupplung gemäß wenigstens einem der vorhergehenden Ansprüche, **dadurch gekennzeichnet, dass**
wenigstens ein Strömungspfad (11b) für den Rückfluss des Fluids aus dem Kupplungsbereich in den Vorratsraum (3) in Drehrichtung vor und wenigstens ein Strömungspfad (11c) für den Zufluss des Fluids aus dem Vorratsraum (3) in den Kupplungsbereich in Drehrichtung hinter dem Strömungswiderstandselement (11a) angeordnet sind.

10. Flüssigkeitsreibkupplung gemäß wenigstens einem der vorhergehenden Ansprüche, **dadurch gekennzeichnet, dass**
der Abtriebskörper (12,13) auf der Innenseite des Umfangs eine konzentrische, in Umfangsrichtung umlaufende Ausnehmung (11f) aufweist.

11. Flüssigkeitsreibkupplung gemäß wenigstens einem der vorhergehenden Ansprüche, **dadurch gekennzeichnet, dass**
die äußere Begrenzung des Strömungswiderstandselements (11a) mit einem vorgegebenen Abstand in die in Umfangsrichtung umlaufende Ausnehmung (11f) des Abtriebskörpers (12,13)eingreift.

12. Flüssigkeitsreibkupplung gemäß wenigstens einem der vorhergehenden Ansprüche, **dadurch gekennzeichnet, dass**
das Strömungswiderstandselement (11a) in die in Umfangsrichtung umlaufende Ausnehmung (11f) weitgehend flüssigkeitsdicht eingreift.

13. Flüssigkeitsreibkupplung gemäß Anspruch 4, **dadurch gekennzeichnet, dass**
die Vorsprünge des Abtriebskörpers (12,13) und/oder des Antriebskörpers (11e) mindestens eine im wesentlichen radial angeordnete Nut (11d) aufweisen, welche die Vorsprünge zumindest teilweise unterbricht und im Kupplungsbereich fluidverbunden ist.

14. Flüssigkeitsreibkupplung gemäß wenigstens einem der vorhergehenden Ansprüche, **dadurch gekennzeichnet, dass**
in Abhängigkeit der Fluidmenge die Kontaktfläche im Kupplungsbereich verändert wird.

15. Flüssigkeitsreibkupplung gemäß Anspruch 13, **dadurch gekennzeichnet, dass**
die Nut (11d) mit einem vorgegebenen Abstand, insbesondere in einem vorgegebenen Winkel, zum Strömungspfad (11b) angeordnet ist.

16. Flüssigkeitsreibkupplung gemäß wenigstens einem der vorhergehenden Ansprüche, **dadurch gekennzeichnet, dass**
die steuerbare Einrichtung zum Verschließen und Öffnen der Strömungspfade (11b,c) in einer ersten Position den Strömungspfad für den Zufluss (11c) des Fluids in den Kupplungsbereich öffnet und den Rückfluss (11b) schließt und in einer zweiten Position den Zufluss (11 c) schließt und den Rückfluss (11b) öffnet.

17. Flüssigkeitsreibkupplung gemäß wenigstens einem der vorhergehenden Ansprüche, **dadurch gekennzeichnet, dass**
die steuerbare Einrichtung zum Verschließen und Öffnen der Strömungspfade (11b,c) ein Dichtungselement (15) sowie ein Gegengewicht (15b) aufweist, die kraftschlüssig an einer Steuerwelle angeordnet sind, und ferner eine Rückstelleinrichtung (16) vorgesehen ist,
und dass das Dichtungselement (15) insbesondere einen vorgegebenen Abstand von der Innenkontur des Antriebskörpers (11) aufweist.

18. Flüssigkeitsreibkupplung gemäß wenigstens einem der vorhergehenden Ansprüche, **dadurch gekennzeichnet, dass**
die steuerbare Einrichtung zum Verschließen und Öffnen zwei Dichtungselemente (30,31) aufweist, die über eine Gelenkverbindung mit einer Steuerwelle (14) verbunden sind und die Strömungspfade (11b,c) radial verschließen.

19. Flüssigkeitsreibkupplung gemäß wenigstens einem der vorhergehenden Ansprüche, **dadurch gekennzeichnet, dass**
die steuerbare Einrichtung zum Verschließen und Öffnen zwei Dichtungselemente (213,214) zum Verschließen von Strömungspfaden (215,216) aufweist, die über einen Hebel (210) mit dem Antriebskörper (201) verbunden sind
und dass die Dichtungselemente (213,214) insbesondere einen vorgegebenen Abstand von der Innenkontur des Antriebskörpers (201) aufweisen.

20. Flüssigkeitsreibkupplung gemäß wenigstens einem der vorhergehenden Ansprüche, **dadurch gekennzeichnet, dass**
wenigstens einer der Strömungspfade (11b,11c,215,216) von einem Dichtungselement (15,213,214) halbradial verschließbar ist.

21. Flüssigkeitsreibkupplung gemäß Anspruch 17 oder 18, **dadurch gekennzeichnet, dass**
die Steuerwelle (14) in ihrer relativen Position zur äußeren Antriebswelle (10) mittels einer elektromagnetisch gesteuerten Drehmomenteinrichtung (2) verstellt wird.

22. Flüssigkeitsreibkupplung gemäß wenigstens einem der vorhergehenden Ansprüche, **dadurch gekennzeichnet, dass**
die Drehmomenteinrichtung (2) im wesentlichen einen kraftschlüssig mit einer Steuerwelle (14) verbundenen Anker (27), einen kraftschlüssig mit der Antriebswelle (10) verbundenen Ring (26) und eine im Gehäuse drehfest angeordnete Spule (22) aufweist.

23. Flüssigkeitsreibkupplung gemäß wenigstens einem der vorhergehenden Ansprüche, **dadurch gekennzeichnet, dass**
eine Lagerungseinrichtung (230) für eine Lagerung des Abtriebskörpers (231) auf der Welle und
eine elektromagnetische Steuereinheit (240) für eine Steuerung einer steuerbaren Einrichtung (210) zum Verschließen und Öffnen eines oder mehrerer Strömungspfade (215,216) vorgesehen sind,
und dass die Lagerungseinrichtung (230) und die elektromagnetische Steuereinheit (240) auf gegenüberliegenden Seiten des Antriebskörpers (201) angeordnet sind.

24. Vorrichtung zum Betreiben eines Lüftungssystems, welches wenigstens einen Ventilator, ein Antriebsaggregat, ein Verbindungselement und wenigstens eine Flüssigkeitsreibkupplung gemäß mindestens einem der vorstehenden Ansprüche, aufweist.

## Claims

1. Hydrodynamic friction clutch, in particular for a motor vehicle fan, with a rotatably mounted shaft, a drive body (11) non-rotatably mounted on the shaft, a driven body (12, 13) rotatably mounted on the shaft and at least partially surrounding the drive body (11) and a clutch area located between the drive body (11) and the driven body (12, 13) and containing a viscous fluid, by means of which the drive body (11) and the driven body (12, 13) can be coupled to transmit a torque,
**characterised in that**
a reservoir (3) containing at least the major part of the fluid is provided radially inside an external circumference of the drive body (11), and **in that**
at least one first flow path (11b) is provided for the return flow of the fluid from the clutch area into the reservoir (3) and at least one second flow path (11c) is provided for the inflow of the fluid from the reservoir (3) into the clutch area, and **in that**
the outer circumference of the drive body (11) features at least one flow resistance element (11a) located between the at least one first (11b) and the at least one second flow path (11c), and **in that**
a controllable device is further provided for sealing and opening at least one of said flow paths (11b, c).

2. Hydrodynamic friction clutch according to claim 1, **characterised in that**
the shaft comprises at least two components, a first component (10) being non-positively connected to a drive unit and a second component (14) being coaxially located within the first component (10) and rotatably mounted relative thereto.

3. Hydrodynamic friction clutch according to claim 2, **characterised in that**
the first component is a drive shaft (10) for the drive body (11) and the second component is a control shaft (14) for the device for sealing and opening at least one of said flow paths (11b, c).

4. Hydrodynamic friction clutch according to at least one of the preceding claims,
**characterised in that**
the drive body (11) is non-positively connected to the drive shaft (10) and the drive body (11) has concentric projections (11e) in the clutch area, which are in particular located on the outer surface of the drive body (11).

5. Hydrodynamic friction clutch according to at least one of the preceding claims,
**characterised in that**
the driven body (12, 13) has internal concentric projections in the clutch area, which engage the projections (11e) of the drive body (11) with a preset clearance.

6. Hydrodynamic friction clutch according to at least one of the preceding claims,
**characterised in that**
the viscous fluid contains at least one fluid from a group including hydraulic oil, silicone oil, silicone, synthetic or natural polymer compounds and hydrocarbon compounds.

7. Hydrodynamic friction clutch according to at least one of the preceding claims,
**characterised in that**
the reservoir (3) for the fluid essentially lies in a cylindrical section of the clutch area within the outer wall of the drive body (11).

8. Hydrodynamic friction clutch according to at least one of the preceding claims,
**characterised in that**
the flow paths (11b, c) are arranged radially outwards in the circumferential area of the drive body (11) at a preset distance from the flow resistance element (11a).

9. Hydrodynamic friction clutch according to at least one of the preceding claims,
**characterised in that**
at least one flow path (11b) for the return flow of the fluid from the clutch area into the reservoir (2) is, in the direction of rotation, located upstream of the flow resistance element (11a), while at least one flow path (11c) for the inflow of the fluid from the reservoir (3) into the clutch area is located downstream thereof.

10. Hydrodynamic friction clutch according to at least one of the preceding claims,
**characterised in that**
the driven body (12, 13) has a concentric, continuous circumferential recess (11f) on the inside of its circumference.

11. Hydrodynamic friction clutch according to at least one of the preceding claims,
**characterised in that**
the outer boundary of the flow resistance element (11a) engages the continuous circumferential recess (11f) of the driven body (12, 13) with a preset clearance.

12. Hydrodynamic friction clutch according to at least one of the preceding claims,
**characterised in that**
the flow resistance element (11a) largely engages the continuous circumferential recess (11f) in a fluid-tight manner.

13. Hydrodynamic friction clutch according to claim 4, **characterised in that**
the projections of the driven body (12, 13) and/or the drive body (11) have at least one essentially radial groove (11d), which at least partially interrupts the projections and is fluid-connected in the clutch area.

14. Hydrodynamic friction clutch according to at least one of the preceding claims,
**characterised in that**
the contact surface in the clutch area varies in dependence on fluid quantity.

15. Hydrodynamic friction clutch according to claim 13, **characterised in that**
the groove (11d) is located at a preset distance from, in particular at a preset angle to, the flow path (11b).

16. Hydrodynamic friction clutch according to at least one of the preceding claims,
**characterised in that**
the controllable device for sealing and opening the flow paths (11b, c) opens the flow path (11c) for the inflow of the fluid into the clutch area in a first position while blocking the return flow (11b) and blocks the inflow (11c) in a second position while opening the return flow (11b).

17. Hydrodynamic friction clutch according to at least one of the preceding claims,
**characterised in that**
the controllable element for blocking and opening the flow paths (11b, c) incorporates a sealing element (15) and a counter-weight (15b) non-positively mounted on a control shaft, and **in that** a reset device (16) is further provided, and **in that**
the sealing element (15) in particular has a preset distance from the internal contour of the drive body (11).

18. Hydrodynamic friction clutch according to at least one of the preceding claims,
**characterised in that**
the controllable element for sealing and opening the flow paths (11b, c) incorporates two sealing elements (30,31) connected to a control shaft (14) by a flexible joint and radially sealing the flow paths (11b, c).

19. Hydrodynamic friction clutch according to at least one of the preceding claims,
**characterised in that**
the controllable element for sealing and opening incorporates two sealing elements (213, 214) for sealing flow paths (215, 216), which are connected to the drive body (201) by a lever (210), and **in that**
the sealing elements (213, 214) in particular have a preset distance from the internal contour of the drive body (201).

20. Hydrodynamic friction clutch according to at least one of the preceding claims,
**characterised in that**
at least one of the flow paths (11b, 11c, 215, 216) can be sealed semi-radially by a sealing element (15, 213, 214).

21. Hydrodynamic friction clutch according to claim 17 or 18, **characterised in that** the relative position of the control shaft (14) to the outer drive shaft (10) is adjusted by means of an electromagnetically controlled torque unit (2).

22. Hydrodynamic friction clutch according to at least one of the preceding claims,
**characterised in that**
the torque unit (2) essentially comprises an armature (27) non-positively connected to a control shaft (14), a ring (26) non-positively connected to the drive shaft (10) and a coil (22) non-rotatably located in the housing.

23. Hydrodynamic friction clutch according to at least one of the preceding claims,
**characterised in that**
a mounting device (230) for mounting the drive body (231) on the shaft and
an electromagnetic control unit (240) for the control of a controllable device (210) for sealing and opening one or more flow paths (215, 216) are provided, and **in that**
the mounting device (230) and the electromagnetic control unit (240) are located on opposite sides of the drive body (201).

24. Device for the operation of a ventilation system, comprising at least one fan, a drive assembly, a connecting element and at least one hydrodynamic friction clutch according to at least one of the preceding claims.

## Revendications

1. Embrayage à frottement visqueux, en particulier pour un ventilateur de véhicule automobile, avec un arbre monté rotatif, un corps menant (11) monté fixe à rotation sur l'arbre, un corps mené (12, 13) monté libre à rotation sur l'arbre entourant au moins partiellement le corps menant (11), et une zone d'embrayage contenant un fluide visqueux et disposée entre le corps menant (11) et le corps mené (12, 13) par laquelle le corps menant (11) et le corps mené (12, 13) peuvent être découplés en vue de la transmission d'un couple,
**caractérisé en ce que**
un espace de stockage (3) pour la réception au moins étendue du fluide est prévu radialement à l'intérieur d'un pourtour du corps menant (11), et
au moins une première voie d'écoulement (11b) pour le reflux du fluide de la zone d'embrayage à l'espace de stockage (3) et au moins une seconde voie d'écoulement (11c) pour l'amenée du fluide de l'espace de stockage (3) à la zone d'embrayage sont prévues, et
le corps menant (11) comprend sur le pourtour au moins un élément de résistance à l'écoulement (11a) qui est disposé entre la au moins première voie d'écoulement (11b) et la au moins seconde voie d'écoulement (11c) et
en outre une installation réglable de fermeture et d'ouverture d'au moins une de ces voies d'écoulement (11b, c) est prévue.

2. Embrayage à frottement visqueux selon la revendication 1, **caractérisé en ce que**
l'arbre comprend au moins deux organes, un premier organe (10) étant relié par adhérence à une unité d'entraînement et un second organe (14) étant logé coaxialement dans le premier organe (10) et rotatif par rapport à celui-ci.

3. Embrayage à frottement visqueux selon la revendication 2, **caractérisé en ce que**
le premier organe est un arbre d'entraînement (10) pour le corps menant (11) et le second organe est un arbre à cames (14) pour l'installation de fermeture et d'ouverture des voies d'écoulement (11b, c).

4. Embrayage à frottement visqueux selon au moins une des revendications précédentes, **caractérisé en ce que**
le corps menant (11) est relié par adhérence à l'arbre d'entraînement (10) et le corps menant (11) comprend dans la zone d'embrayage des saillies concentriques (11e) qui sont disposées en particulier sur les surfaces externes du corps menant (11).

5. Embrayage à frottement visqueux selon au moins une des revendications précédentes, **caractérisé en ce que**
le corps mené (12, 13) comprend dans la zone d'embrayage des saillies concentriques situées vers l'intérieur qui s'engagent à une distance prédéfinie dans les saillies (11e) du corps menant (11).

6. Embrayage à frottement visqueux selon au moins une des revendications précédentes, **caractérisé en ce que**
le fluide visqueux comprend au moins un fluide d'un groupe des fluides comprenant l'huile de transmission hydraulique, l'huile silicone, la silicone, les liaisons polymères synthétiques ou naturelles et les liaisons d'hydrocarbure.

7. Embrayage à frottement visqueux selon au moins une des revendications précédentes, **caractérisé en ce que**
l'espace de stockage (3) pour le fluide s'étend substantiellement dans un segment cylindrique de la zone d'embrayage à l'intérieur de la paroi externe du corps menant (11).

8. Embrayage à frottement visqueux selon au moins une des revendications précédentes, **caractérisé en ce que**
les voies d'écoulement (11b, c) sont disposées radialement à l'extérieur dans la zone périphérique du corps menant (11) et présentent une distance prédéfinie par rapport à l'élément de résistance à l'écoulement (11a).

9. Embrayage à frottement visqueux selon au moins une des revendications précédentes, **caractérisé en ce que**
au moins une voie d'écoulement (11b) pour le reflux du fluide de la zone d'embrayage à l'espace de stockage (3) dans le sens de rotation et au moins une voie d'écoulement (11c) pour l'amenée du fluide de l'espace de stockage (3) à la zone d'embrayage dans le sens de rotation sont disposées à l'arrière de l'élément de résistance à l'écoulement (11a).

10. Embrayage à frottement visqueux selon au moins une des revendications précédentes, **caractérisé en ce que**
le corps mené (12, 13) présente sur la face interne de la périphérie un évidement (11f) concentrique pivotant dans le sens périphérique.

11. Embrayage à frottement visqueux selon au moins une des revendications précédentes, **caractérisé en ce que**
la limite externe de l'élément de résistance à l'écoulement (11a) s'engage à une distance prédéfinie dans l'évidement (11f) pivotant dans le sens périphérique du corps mené (12, 13).

12. Embrayage à frottement visqueux selon au moins une des revendications précédentes, **caractérisé en ce que**
l'élément de résistance à l'écoulement (11a) s'engage de façon largement étanche aux liquides dans l'évidement (11f) pivotant dans le sens périphérique.

13. Embrayage à frottement visqueux selon la revendication 4, **caractérisé en ce que**
les saillies du corps mené (12, 13) et/ou du corps menant (11e) comprennent au moins une rainure (11d) disposée substantiellement radialement, laquelle interrompt les saillies au moins partiellement et est reliée au fluide dans la zone d'embrayage.

14. Embrayage à frottement visqueux selon au moins une des revendications précédentes, **caractérisé en ce que**
la surface de contact est modifiée dans la zone d'embrayage en fonction de la quantité de fluide.

15. Embrayage à frottement visqueux selon la revendication 13, **caractérisé en ce que**
la rainure (11d) est disposée à une distance prédéfinie, en particulier à un angle prédéfini, par rapport à la voie d'écoulement (11b).

16. Embrayage à frottement visqueux selon au moins une des revendications précédentes, **caractérisé en ce que**
l'installation réglable de fermeture et d'ouverture des voies d'écoulement (11b, c) dans une première position ouvre la voie d'écoulement pour l'amenée (11c) de fluide dans la zone d'embrayage et ferme le reflux (11b), et ferme dans une seconde position l'amenée (11c) et ouvre le reflux (11b).

17. Embrayage à frottement visqueux selon au moins une des revendications précédentes, **caractérisé en ce que**
l'installation réglable de fermeture et d'ouverture des voies d'écoulement (11b, c) comprend un élément d'étanchéité (15) ainsi qu'un contrepoids (15b) qui est disposé par adhérence sur un arbre à cames, et un dispositif de réarmement (16) est en outre prévu,
et l'élément d'étanchéité (15) présente en particulier une distance prédéfinie par rapport au contour interne du corps menant (11).

18. Embrayage à frottement visqueux selon au moins une des revendications précédentes, **caractérisé en ce que**
l'installation réglable de fermeture et d'ouverture comprend deux éléments d'étanchéité (30, 31) qui sont reliés via un assemblage articulé à un arbre à cames (14) et obturent radialement les voies d'écoulement (11b, c).

19. Embrayage à frottement visqueux selon au moins une des revendications précédentes, **caractérisé en ce que**
l'installation réglable de fermeture et d'ouverture comprend deux éléments d'étanchéité (213, 214) de fermeture des voies d'écoulement (215, 216) qui sont reliés par l'intermédiaire d'un levier (210) au corps menant (201)
et les éléments d'étanchéité (213, 214) présentent en particulier une distance prédéfinie par rapport au contour interne du corps menant (201).

20. Embrayage à frottement visqueux selon au moins une des revendications précédentes, **caractérisé en ce que**
au moins une des voies d'écoulement (11b, 11c, 215, 216) peut être obturée de façon semi-radiale par un élément d'étanchéité (15, 213, 214).

21. Embrayage à frottement visqueux selon la revendication 17 ou 18, **caractérisé en ce que**
l'arbre à cames (14) est déplacé dans sa position relative par rapport à l'arbre d'entraînement externe (10) au moyen d'un dispositif de couple (2) commandé de façon électromagnétique.

22. Embrayage à frottement visqueux selon au moins une des revendications précédentes, **caractérisé en ce que**
le dispositif de couple (2) comprend substantiellement un induit (27) relié par adhérence à un arbre à cames (14), un anneau (26) relié par adhérence à l'arbre d'entraînement (10) et une bobine (22) disposée fixe à rotation dans le carter.

23. Embrayage à frottement visqueux selon au moins une des revendications précédentes, **caractérisé en ce qu'**il est prévu
un dispositif de paliers (230) pour un logement du corps mené (231) sur l'arbre et
une unité de commande électromagnétique (240) pour une commande d'une installation (210) réglable pour la fermeture et l'ouverture d'une ou plusieurs voies d'écoulement (215, 216),
et le dispositif de paliers (230) et l'unité de commande électromagnétique (240) sont disposés sur des faces opposées du corps menant (201).

24. Dispositif d'actionnement d'un système de ventilation, qui comprend au moins un ventilateur, une unité d'entraînement, un élément de liaison et au moins un embrayage à frottement visqueux selon au moins une des revendications précédentes.
